# EUROPÄISCHE PATENTSCHRIFT

(11) **EP 2 992 204 B1**
(45) Veröffentlichungstag und Bekanntmachung des Hinweises auf die Patenterteilung: **08.03.2017**
(21) Anmeldenummer: 15718244.5
(22) Anmeldetag: 28.04.2015
(51) Int. Cl.: F02M 59/48, F16K 27/02, F16K 17/04, F02M 59/46

(54) **VERFAHREN ZUR HERSTELLUNG EINES DRUCKBEGRENZUNGSVENTILS, DRUCKBEGRENZUNGSVENTIL UND BAUTEIL FÜR EIN KRAFTSTOFFEINSPRITZSYSTEM**
METHOD FOR PRODUCING A PRESSURE-LIMITING VALVE, PRESSURE-LIMITING VALVE, AND COMPONENT FOR A FUEL INJECTION SYSTEM
PROCÉDÉ DE FABRICATION D'UNE SOUPAPE DE LIMITATION DE PRESSION, SOUPAPE DE LIMITATION DE PRESSION, ET COMPOSANT POUR SYSTÈME D'INJECTION DE CARBURANT

(30) Priorität: 12.05.2014 DE 102014208891
(43) Veröffentlichungstag der Anmeldung: 09.03.2016
(73) Patentinhaber: Continental Automotive GmbH, 30165 Hannover (DE)
(72) Erfinder: STEINERT, Ulf, 93142 Maxhütte-Haidhof (DE); KOCH, Hans-Jörg, 93179 Brennberg (DE)
(86) Internationale Anmeldenummer: PCT/EP2015/059254
(87) Internationale Veröffentlichungsnummer: WO 2015/173013

(56) Entgegenhaltungen:
- EP-A1- 0 383 075
- DE-A1-102011 089 797

## Beschreibung

Die Erfindung betrifft ein Verfahren zur Herstellung eines Druckbegrenzungsventils für ein Kraftstoffeinspritzsystem, insbesondere für ein Kraftstoffeinspritzsystem eines Kraftfahrzeugs.

Einspritzsysteme für Brennkraftmaschinen von Kraftfahrzeugen weisen herkömmlich Druckbegrenzungsventile auf. Die Druckbegrenzungsventile sind beispielsweise in Hochdruckkraftstoffpumpen integriert und schützen die Bauteile bei Wärmeausdehnung oder bei Fehlfunktionen vor zu hohen Kraftstoffdrücken. Beispielsweise öffnet ein Druckbegrenzungsventil in einem Benzineinspritzsystem ab einem Kraftstoffdruck von 250 Bar. Das Druckbegrenzungsventil gibt dann den Weg von der Hochdruckseite zur Niederdruckseite frei.

Für einen verlässlichen Betrieb des Einspritzsystems werden sehr hohe Anforderungen an die Genauigkeit des Öffnungsdrucks des Druckbegrenzungsventils gestellt. Um den Toleranzbereich gering zu halten, wird beispielsweise ein hydraulisch messendes Einstellverfahren zum Einstellen des Öffnungsdrucks verwendet. Dabei wird herkömmlich beispielsweise mittels einer Drehbewegung über ein Gewinde die Federkraft auf den Schließkörper des Druckbegrenzungsventils so lange variiert, bis sich der gewünschte Öffnungsdruck eingestellt hat. Die dafür notwendige Herstellung von zwei Gewinden und Platz für eine separate Dichtung beinhaltet einen fertigungstechnischen Aufwand und benötigt entsprechenden Bauraum.

Die Druckbegrenzungsventile müssen im verbauten Zustand zudem gegen Drücken von bis zu 400 bar ohne messbare Leckage abgedichtet sein.

EP 0 383 075 A1 offenbart ein Gleichdruckentlastungsventil für den Einbau in Kraftstoffdruckleitungen von Einspritzanlagen für Brennkraftmaschinen zwischen Einspritzpumpe und Einspritzdüse, welches ein Druckventilglied aufweist, mit einer am Ventilgliedkörper durch radiales Verformen befestigten Gehäusehülse, in der ein Entlastungsventil mit einem Sitzteil, einem Entlastungsventilglied und einer Schraubenfeder angeordnet ist, wobei das Sitzteil ebenfalls durch radiales Verformen der Gehäusehülse mit dieser verbunden wird und wobei die Gehäusehülse aus weicherem, verformbaren Material, hingegen das Sitzteil, der Ventilgliedkörper und das Entlastungsventilglied aus hartem Material hergestellt werden.

Es ist wünschenswert, ein Verfahren zur Herstellung eines Druckbegrenzungsventils anzugeben, das einen großen Einstellbereich für den Öffnungsdruck ermöglicht.

Gemäß Ausführungsformen der Erfindung umfasst ein Verfahren zur Herstellung eines Druckbegrenzungsventils für ein Kraftstoffeinspritzsystem ein Bereitstellen eines Gehäuses mit einer Aufnahmebohrung, die entlang einer Längsachse einen innerhalb vorgegebener Toleranzen gleichbleibenden Durchmesser aufweist. Ein Dichtelement, eine Feder und einer Hülse mit einem Fixierstift werden bereitgestellt. Der Fixierstift ragt durch einen Hohlraum. Der Hohlraum ist von der Hülse umgeben. Der Fixierstift weist eine Form auf, so dass seine Bewegung nach außerhalb die Hülse zumindest abschnittsweise plastisch deformiert.

Das Dichtelement, die Feder und die Hülse mit dem Fixierstift werden in der Aufnahmebohrung so angeordnet, dass die Feder sich mit einem ersten Ende an der Hülse abstützt und mit einem zweiten Ende an dem Dichtelement abstützt. Die Hülse wird relativ zu dem Gehäuse entlang der Längsachse bewegt. Dadurch wird die Vorspannung der Feder verändert. Der Fixierstifts wird entlang der Längsachse relativ zu der Hülse bewegt und dadurch die Hülse plastisch verformt, um die Hülse in das Gehäuse einzupressen, wenn ein Wert der Vorspannung der Feder mit einem vorgegebenen Wert des Öffnungsdrucks für das Druckbegrenzungsventil korrespondiert.

Die Hülse wird lediglich axial innerhalb der Aufnahmebohrung verschoben. Auf eine Rotation der Hülse relativ zu dem Gehäuse kann verzichtet werden. Somit ist ein großer Einstellbereich für den Öffnungsdruck des Druckbegrenzungsventils möglich. Insbesondere ist die Hülse entlang der Längsachse um mehr als 1 mm verschiebbar, um die Vorspannung der Feder zu verändern.

Gemäß eines weiteren, nicht erfindungsgemäßen Aspekts weist ein Druckbegrenzungsventil für ein Kraftstoffeinspritzsystem eine Hülse entlang einer Längsachse auf. Das Druckbegrenzungsventil weist einen Fixierstift auf, der durch einen Hohlraum ragt. Der Hohlraum ist von der Hülse umgeben. Eine Feder stützt sich mit einem ersten Ende an der Hülse ab und mit einem gegenüberliegenden zweiten Ende an einem Dichtelement. Das Druckbegrenzungsventil weist einen Dichtsitz auf, um einen Fluidfluss durch das Druckbegrenzungsventil in einer Schließposition zu sperren, in der das Dichtelement in Kontakt mit dem Dichtsitz ist, und in weiteren Positionen freizugeben. Die Hülse weist einen Außenumfang auf, der in einem ersten Zustand entlang der Längsachse innerhalb vorgegebener Toleranzen gleich groß ist. Der Fixierstift weist eine Form auf so, dass durch eine Bewegung des Fixierstifts entlang der Längsachse relativ zu der Hülse die Hülse plastisch deformierbar ist, um die Hülse in ein Gehäuse einzupressen.

Der erste Zustand entspricht insbesondere einem ursprünglichen Zustand, in dem die Hülse noch nicht in das Gehäuse eingepresst ist. Der Außenumfang der Hülse weist keine Stufen, Gewinde oder ähnliches auf. Schwankungen des Außenumfangs treten beispielsweise lediglich durch herstellungsbedingte Toleranzen auf. Für einen besseren Halt der verpressten Hülse in dem Gehäuse weist die Hülse gemäß Ausführungsformen eine Strukturierung wie Riefen oder ähnliches auf. Der Außenumfang ist dann der größte Außenumfang der Strukturierung. Insbesondere schwankt der Außenumfang innerhalb der vorgegebenen Toleranz höchstens um 0,5 mm.

Da die Ventilhülse durch die plastische Deformierung in das Gehäuse eingepresst wird, ist keine Schraubverbindung zwischen der Hülse und dem Gehäuse notwendig. Die Montage der Hülse in dem Gehäuse ist somit einfach und schnell durchführbar. Zudem ist es möglich, die Ventilhülse kostengünstig zu fertigen. Die Ventilhülse ist beispielsweise durch Tiefziehen hergestellt. Die Bewegung des Fixierstifts relativ zu der Hülse hätte ohne das Gehäuse eine Vergrößerung des Außenumfangs zur Folge. Der Fixierstift drückt die Hülse nach außen und deformiert sie dabei im Vergleich zu der Form im ersten Zustand.

Der Fixierstift steht in Richtung des Dichtelements über die Hülse vor, um eine Führung für die Feder zu bilden. Der Fixierstift sichert die Feder radial sowohl während der Montage des Druckbegrenzungsventils als auch während des Betriebs.

Der Fixierstift weist an einem dem Dichtelement zugewandten Ende einen vorspringenden Bereich auf, mittels dem die Hülse plastisch deformierbar ist. Der Fixierstift weist eine Form auf, die ihren Durchmesser entlang der Längsachse ändert. Im ersten Zustand ist der Bereich mit dem geringeren Durchmesser innerhalb des Hohlraums angeordnet. Zum Verpressen wird der Stift relativ zu der Hülse so bewegt, dass der vorspringende Bereich in den Hohlraum gezogen wird. Die Hülse wird dadurch plastisch verformt.

Die Hülse umgibt den Hohlraum so, dass der Hohlraum an dem dem Dichtelement zugewandten Ende einen größeren Durchmesser aufweist als an dem dem Dichtelement abgewandten Ende. Somit ist auch an dem dem Dichtelement
abgewandten Ende ein spielfreier Kontakt mit dem kleiner Durchmesser des Fixierstifts realisiert. Zudem ist ein sicheres Verpressen möglich.

Der Fixierstift weist eine Strukturierung auf, um fluiddicht mit der Hülse verbunden zu werden. Der Fixierstift weist beispielsweise an dem vorspringenden Bereich Beißkanten oder ähnliches auf, um nach dem Verpressen auch über eine lange Betriebsdauer des Druckbegrenzungsventils sicher mit der Hülse verbunden zu bleiben. Somit wird auch die Dichtheit des Druckbegrenzungsventils an der Hülse gewährleistet.

Gemäß eines weiteren nicht erfindungsgemäßen Aspekts weist ein Bauteil für ein Kraftstoffeinspritzsystem ein anmeldungsgemäßes Druckbegrenzungsventil auf. Das Bauteil weist zudem das Gehäuse mit einer Aufnahmebohrung auf. Die Hülse, die Feder und das Dichtelement sind in der Aufnahmebohrung angeordnet. Die Aufnahmebohrung weist entlang der Längsachse einen innerhalb vorgegebener Toleranzen gleichbleibenden Durchmesser auf. Beispielsweise ist das Bauteil eine Hochdruckpumpe, insbesondere eine Hubkolbenpumpe, zur Kraftstoffförderung. Gemäß weiteren Ausführungsformen ist Bauteil eine Kraftstoffsammelleitung oder ein weiteres Element des Kraftstoffeinspritzsystems.

Das Bauteil weist das Gehäuse mit der Aufnahmebohrung auf, die entlang der Längsachse dem innerhalb vorgegebenen Toleranzen gleichbleibenden Durchmesser aufweist. Die Hülse weist jedoch einen Außenumfang auf, der sich entlang der Längsachse verändert. Der Außenumfang der Hülse ändert sich jedoch innerhalb vorgegebener Grenzwerte nur so wenig, dass ein sicheres Verpressen der Hülse in der Aufnahmebohrung
möglich ist. Die restlichen Elemente des Druckbegrenzungsventils bleiben dazu unverändert.

Durch die Fixierung der Hülse mittels der plastischen Deformierung ist eine einfache Kopplung zwischen der Hülse und dem Gehäuse ermöglicht. Die Montage der Hülse in dem Gehäuse ist einfach und schnell durchführbar. Zudem ist es möglich, die Hülse in verschiedenen Positionen relativ zu dem Gehäuse mit dem Gehäuse zu fixieren. Durch die verschiedenen Positionen der Hülse wird der Öffnungsdruck des Druckbegrenzungsventils eingestellt. Dadurch, dass die Aufnahmebohrung entlang der Längsachse einen im Wesentlichen gleichbleibenden Durchmesser aufweist, ist ein großer Einstellbereich für den Öffnungsdruck möglich. Die relative Bewegung der Hülse zu dem Gehäuse wird nicht mehr durch einen Stufensprung zwischen zwei unterschiedlichen Durchmessern der Aufnahmebohrung begrenzt. Zudem ist keine separate Dichtung, wie beispielsweise ein O-Ring, zur Abdichtung zwischen dem Gehäuse und der Hülse nötig. Somit liegt eine Bauteilreduzierung vor. Außerdem ist es möglich, den Bauraum des Bauteils zu reduzieren. Der Durchmesser der Aufnahmebohrung kann im Vergleich zu herkömmlichen Aufnahmebohrungen für ein Schraubgewinde reduziert werden. Bei gleichbleibender Wanddicke um die Aufnahmebohrung herum wird somit eine Bauraumreduzierung ermöglicht. Dies führt einerseits zu einem geringeren Gewicht des Bauteils und dadurch insbesondere zu einer Reduzierung von Abgasen während des Betriebs einer Brennkraftmaschine, die durch das Kraftstoffeinspritzsystem mit Kraftstoff versorgt wird. Andererseits können die Systemdrücke angehoben werden, da bei gleichbleibenden Außenabmessungen der Pumpe größere Wandstärken realisierbar sind.

Die Hülse ist entlang des gesamten Außenumfangs in direktem Kontakt mit dem Gehäuse. Die Hülse weist keine Vorsprünge oder Einkerbungen auf, in denen die Hülse
beabstandet zu dem Gehäuse ist. Herkömmlich ist in einer derartigen Einkerbung beispielsweise der O-Ring vorgesehen. Die fluiddichte Verbindung zwischen der Hülse und dem Gehäuse wird durch das Verpressen realisiert.

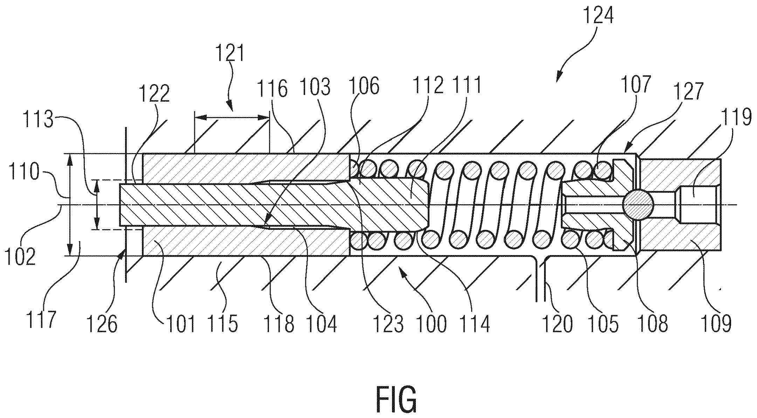

Weitere Vorteile, Merkmale und Weiterbildungen ergeben sich aus den nachfolgenden in Verbindung mit der Figur erläuterten Beispielen.

Die einzige Figur zeigt ein Bauteil mit einem Druckbegrenzungsventil.

Die Figur zeigt ein Bauteil 124 für ein Kraftstoffeinspritzsystem gemäß Ausführungsformen. Beispielsweise ist das Bauteil 124 eine Hochdruckpumpe, insbesondere eine Hubkolbenpumpe. Die Hochdruckpumpe ist insbesondere eingerichtet, Fluid, beispielsweise Benzin oder Diesel, aus einem Fluidtank zu einem Druckspeicher (auch Common Rail genannt) zu fördern. In dem Kraftstoffeinspritzsystem liegen im Fall von Benzin Systemdrücke von 150 bar oder mehr vor, beispielsweise 250 bar oder bis zu 350 bar oder mehr. Von dem Druckspeicher wird das Fluid mittels Einspritzventil in Brennräume einer Brennkraftmaschine zum Antrieb des Kraftfahrzeugs eingespritzt.

In dem Bauteil 124 ist ein Druckbegrenzungsventil 100 angeordnet. Das Druckbegrenzungsventil 100 weist eine Hülse 101 auf. Die Hülse 101 erstreckt sich entlang einer Längsachse 102.

Innerhalb der Hülse 101 ist ein Fixierstift 103 angeordnet. Der Fixierstift 103 erstreckt sich länglich ausgedehnt entlang der Längsachse 102. Der Fixierstift 103 ist insbesondere länger als die Hülse 101, sodass er beidseitig der Hülse 101 über diese hervorspringt. Dadurch ist auf der nach innen gewandten Seite ein vorspringender Bereich 112 des Fixierstifts 103 gebildet und auf der nach außen gewandten Seite ein Kontaktbereich 122. Der Fixierstift 103 ragt durch einen Hohlraum 104 der Hülse 101. Der Hohlraum 104 erstreckt sich entlang der Längsachse 102 durch die Hülse 101.

Eine Feder 105 stützt sich mit einem ersten Ende 106 an der Hülse 101 ab. Die Feder ist insbesondere eine Spiralfeder. Mit ihrem zweiten Ende 107 stützt sich die Feder an einem Dichtelement 108 ab. Die Feder ist eingerichtet, das Dichtelement 108 gegen einen Dichtsitz 109 zu drücken. An dem Dichtsitz 109 ist ein Fluideinlass 119 vorgesehen.

Am Fluideinlass 119 liegt im Betrieb das Fluid und der Druck an. Im geschlossenen Zustand, wenn das Dichtelement 108 in Kontakt mit dem Dichtsitz 109 ist, ist ein Fluidfluss aus dem Fluideinlass 119 in das Druckbegrenzungsventil 100 gesperrt. Steigt der Druck im Fluideinlass 119 über den Öffnungsdruck des Druckbegrenzungsventils 100, der im Wesentlichen durch die Feder 105 vorgegeben ist, hebt das Dichtelement 108 von dem Dichtsitz 109 ab. Somit ist ein Fluidfluss von dem Fluideinlass 119 zu einem Fluidauslass 120 freigegeben. Das Druckbegrenzungsventil 100 weist beispielsweise einen Öffnungsdruck auf, sodass der Systemdruck auf der Seite des Fluideinlass 119 beispielsweise bei 150 bar oder mehr liegt, insbesondere bei 250 bar oder 350 bar.

Das Bauteil 124 weist ein Gehäuse 115 auf. Beispielsweise ist das Gehäuse 115 das Pumpengehäuse der Hochdruckpumpe. In das Gehäuse 115 ist eine Aufnahmebohrung 116 eingebracht. Die Aufnahmebohrung weist beginnend an einer Außenseite 126 des Gehäuses 115 bis zu einem Bereich 127 einen im Wesentlichen gleichbleibenden Durchmesser 117 auf. Der Bereich 127 ist insbesondere der Bereich, in dem das Dichtelement 108 angeordnet ist und der an den Dichtsitz 109 angrenzt. Die Aufnahmebohrung 116 erstreckt sich beginnend an der Außenseite 126 entlang der Längsachse 102.

Der Durchmesser 117 weist lediglich aufgrund von herstellungsbedingten Toleranzen Schwankungen auf. Insbesondere weist die Aufnahmebohrung 116 einen Durchmesser 117 auf, der ohne eine Abstufung aufgrund von unterschiedlichen Bohrergrößen ausgebildet ist. Beispielsweise wird ein einziger Bohrer verwendet, um die Aufnahmebohrung 116 in das Gehäuse 115 einzubringen. Beispielsweise weist der Durchmesser 117 der Aufnahmebohrung 116 beginnend bei der Außenseite 126 bis zum Bereich 127 einen Durchmesser von 5 mm auf, wobei eine Schwankung von weniger als 1 % vorliegt. Die toleranzbedingten Schwankungen des Durchmessers 117 sind insbesondere kleiner als 1 mm.

Die Hülse 101 weist einen Außenumfang 110 auf. Der Außenumfang 110 korrespondiert mit dem Durchmesser 117. Der Außenumfang 110 der Hülse 101 ist entlang der Längsachse 102 im Wesentlichen gleichbleibend. Lediglich herstellungsbedingte Toleranzen und/oder Strukturierungen zum bessern Abdichten sind am Außenumfang 110 vorgesehen. In einem ersten Zustand, in dem die Hülse 101 noch nicht mit dem Gehäuse 115 verbunden ist, ist die Hülse 101 in die Aufnahmebohrung 116 einschiebbar und in der Aufnahmebohrung 116 relativ zu dem Gehäuse 115 verschiebbar. Die Hülse wird innerhalb des Gehäuses 115 gegen die Feder 115 gedrückt, bis eine vorgegebene Vorspannung der Feder 105 erreicht ist. Dazu ist die Hülse 101 innerhalb des Gehäuses 115 entlang des Einstellbereichs 121 axial zur Längsachse 102 verschiebbar. Eine Rotation zum Einschrauben der Hülse ist nicht nötig. Der Einstellbereich 121 ist insbesondere länger als 1 mm, beispielsweise länger als 1,5 mm.

Wenn die Position der Hülse 101 relativ zu dem Gehäuse 115 erreicht ist, an der die Feder 105 die vorgegebene Vorspannung aufweist, wird die Hülse 101 in das Gehäuse 115 eingepresst. Dazu wird der Fixierstift 103 entlang der Längsachse 102 nach außen gezogen. Der Fixierstift 103 weist eine Form auf, sodass seine Bewegung nach außerhalb die Hülse 101 zumindest abschnittsweise plastisch deformiert. Dadurch wird die Hülse 101 fluiddicht in das Gehäuse 115 eingepresst. Somit kann auf weitere Dichtelemente verzichtet werden. Zur fluiddichten Kopplung der Hülse mit dem Gehäuse 115 ist lediglich die einstückige Hülse notwendig. Im verpressten Zustand weisen die Hülse 101 und das Gehäuse 115 eine Kontaktfläche 118 auf. Insbesondere erstreckt sich die Kontaktfläche 118 entlang der Längsachse 102 entlang dem gesamten Außenumfang 110 der Hülse 101. Zwischen der Hülse 101 und dem Gehäuse 105 ist am Außenumfang 110 kein Freiraum vorgesehen.

Zum Verpressen der Hülse 101 in das Gehäuse 115 weist der Fixierstift 103 an seinem dem Dichtelement 108 zugewandten Ende 111 den vorspringenden Bereich 112 auf. Der vorspringende Bereich 112 weist gemäß Ausführungsformen eine Strukturierung 114 auf. Zwischen dem vorspringenden Bereich 112 und dem Schaft des Fixierstifts 103, der einen geringeren Durchmesser aufweist als der vorspringende Bereich 112, ist eine schräge Flanke 123 vorgesehen. Im unverpressten ersten Zustand ist die schräge Flanke 123 insbesondere in Kontakt mit der Hülse 101. Zum Verpressen greift ein Werkzeug an dem Kontaktbereich 122 den Stift und zieht den vorspringenden Bereich 112 in den Hohlraum 104. Die schräge Flanke 123 erleichtert dabei die Relativbewegung zwischen dem Fixierstift 103 und der Hülse 101. Ein Durchmesser 113 des Hohlraums 104 und der Durchmesser des vorspringenden Bereichs 112 sind so aufeinander abgestimmt, dass die plastische Verformung zum Einpressen der Hülse durch das Einbringen des vorspringenden Bereichs 112 in den Hohlraum 104 ermöglicht wird.

Auch nach der Fixierung der Hülse 101 in dem Gehäuse 115 steht der Fixierstift 103 in Richtung des Dichtelements 108 über die Hülse 101 über. Der überstehende Bereich fungiert im Betrieb als Federführung 125 zur radialen Sicherung der Feder 105. Der vorspringende Bereich 105 ist so in die Hülse 101 eingebracht, dass die Kontaktfläche zwischen der Hülse 101 und dem Fixierstift 103 fluiddicht ausgebildet ist. Die Strukturierung 114 am vorspringenden Bereich 112 verbessert die fluiddichte Verbindung.

Durch die Verwendung der Hülse 101 mit dem gleichbleibenden Außenumfang 110 und dem Gehäuse 115 mit der Aufnahmebohrung 116, die den gleichbleibenden Durchmesser 117 aufweist, kann der Einstellbereich 121 im Vergleich zu herkömmlichen abgestuften Aufnahmebohrungen vergrößert werden. Statt einer Stellschraube und einem Dichtelement ist nur noch ein einziges Bauteil, die Hülse 101 vorgesehen. Aufgrund des gleichbleibenden Durchmessers 117 ist eine Bauraumreduzierung der Pumpe im Vergleich zu Pumpen mit einem größeren Dichtdurchmesser als der Gewindedurchmesser ermöglicht.

## Patentansprüche

1. Verfahren zur Herstellung eines Druckbegrenzungsventils (100) für ein Kraftstoffeinspritzsystem, umfassend:
- Bereitstellen eines Gehäuses (115) mit einer Aufnahmebohrung (116), die entlang einer Längsachse (102) einen innerhalb vorgegebener Toleranzen gleichbleibenden Durchmesser (117) aufweist,
- Bereitstellen eines Dichtelements (108), einer Feder (105) und einer Hülse (101) mit einem Fixierstift (103), der durch einen Hohlraum (104) ragt, der von der Hülse (101) umgeben ist, wobei der Fixierstift (103) eine Form aufweist, so dass seine Bewegung nach außerhalb die Hülse (101) zumindest abschnittsweise plastisch deformiert,
- Anordnen des Dichtelements (108), der Feder (105) und der Hülse (101) mit dem Fixierstift (103) in der Aufnahmebohrung (116) so, dass die Feder (105) sich mit einem ersten Ende (106) an der Hülse (101) abstützt und mit einem zweiten Ende (107) an dem Dichtelement (108) abstützt,
- Bewegen der Hülse (101) relativ zu dem Gehäuse (115) entlang der Längsachse (102) und dadurch Verändern der Vorspannung der Feder (105),
**gekennzeichnet durch** Bewegen des Fixierstifts (103) entlang der Längsachse (102) relativ zu der Hülse (101) und **dadurch** plastisch Verformen der Hülse (101) zum Einpressen der Hülse (101) in das Gehäuse (115), wenn ein Wert der Vorspannung der Feder (105) mit einem vorgegebenen Wert des Öffnungsdrucks für das Druckbegrenzungsventil (100) korrespondiert.

2. Verfahren nach Anspruch 1, bei dem die Hülse (101) zur Veränderung der Vorspannung entlang der Längsachse (102) um mehr als einen Millimeter verschiebbar ist.

## Claims

1. Method for producing a pressure limiting valve (100) for a fuel injection system which consists in:
- providing a housing (115) having a locating bore (116), which has a diameter (117) that remains constant within predefined tolerances along a longitudinal axis (102), providing a sealing element (108), a spring (105) and a sleeve (101) with a fixing pin (103), which protrudes through a cavity (104), which is enclosed by the sleeve (101), wherein the fixing pin (103) is shaped so that its movement outwards plastically deforms the sleeve (101) at least in sections,
- arranging the sealing element (108), the spring (105) and the sleeve (101) with the fixing pin (103) in the locating bore (116), so that the spring (105) is supported by a first end (106) on the sleeve (101) and by a second end (107) on the sealing element (108),
- moving the sleeve (101) relative to the housing (115) along the longitudinal axis (102) and thereby adjusting the preload of the spring (105),
**characterized by** moving the fixing pin (103) along the longitudinal axis (102) relative to the sleeve (101) and thereby plastically deforming the sleeve (101), in order to press the sleeve (101) into the housing (115), when a value of the preload of the spring (105) corresponds to a predefined value of the opening pressure for the pressure limiting valve (100).

2. Method according to Claim 1, in which the sleeve (101) is displaceable by more than one millimeter along the longitudinal axis (102), in order to adjust the preload.

## Revendications

1. Procédé de fabrication d'une soupape de limitation de la pression (100) pour un système d'injection de carburant, comprenant les étapes consistant à :
- fournir un boîtier (115) avec un alésage de réception (116) qui présente un diamètre uniforme (117) le long d'un axe longitudinal (102) à l'intérieur de tolérances prédéfinies,
- fournir un élément d'étanchéité (108), un ressort (105) et une douille (101) avec une goupille de fixation (103) qui pénètre à travers une cavité (104) entourée par la douille (101), la goupille de fixation (103) présentant une forme telle que son déplacement vers l'extérieur déforme la douille (101) au moins en partie plastiquement,
- disposer l'élément d'étanchéité (108), le ressort (105) et la douille (101) avec la goupille de fixation (103) dans l'alésage de réception (116) de telle sorte que le ressort (105) s'appuie avec une première extrémité (106) contre la douille (101) et avec une deuxième extrémité (107) contre l'élément d'étanchéité (108),
- déplacer la douille (101) par rapport au boîtier (115) le long de l'axe longitudinal (102) et modifier ainsi la précontrainte du ressort (105),
**caractérisé par** le fait de déplacer la goupille de fixation (103) le long de l'axe longitudinal (102) par rapport à la douille (101) et de déformer ainsi plastiquement la douille (101) pour enfoncer la douille (101) dans le boîtier (115) lorsqu'une valeur de la précontrainte du ressort (105) correspond à une valeur prédéfinie de la pression d'ouverture pour la soupape de limitation de la pression (100).

2. Procédé selon la revendication 1, dans lequel la douille (101) peut être déplacée de plus d'un millimètre le long de l'axe longitudinal (102) pour modifier la précontrainte.
